# EUROPÄISCHE PATENTSCHRIFT

(11) **EP 0 937 328 B1**
(45) Veröffentlichungstag und Bekanntmachung des Hinweises auf die Patenterteilung: **12.12.2007**
(21) Anmeldenummer: 98938870.7
(22) Anmeldetag: 31.08.1998
(51) Int. Cl.: H02K 26/00, H02K 41/035, E05B 47/00, F02D 11/10

(54) **ELEKTROMOTORISCHER VERSTELLANTRIEB**
ELECTROMOTIVE ADJUSTABLE DRIVE
MECANISME DE REGLAGE A MOTEUR ELECTRIQUE

(30) Priorität: 08.09.1997 DE 19739068
(43) Veröffentlichungstag der Anmeldung: 25.08.1999
(73) Patentinhaber: Koninklijke Philips Electronics N.V., 5621 BA Eindhoven (NL); Philips Intellectual Property & Standards GmbH, 20099 Hamburg (DE)
(72) Erfinder: ACKERMANN, Bernd, NL-5656 AA Eindhoven (NL); HOUKES, Martin, NL-5656 AA Eindhoven (NL)
(74) Vertreter: Volmer, Georg
(86) Internationale Anmeldenummer: PCT/IB1998/001361
(87) Internationale Veröffentlichungsnummer: WO 1999/013557

(56) Entgegenhaltungen:
- EP-A- 0 729 218
- DE-A- 19 606 836
- FR-A- 1 502 162
- GB-A- 1 213 463
- GB-A- 1 213 673
- US-A- 2 882 459
- US-A- 4 845 424
- US-A- 5 243 241
- "grooves give torque motor more torque in less rotation" PRODUCT ENGINEERING, Bd. 36, Nr. 21, 11. Oktober 1965, Seite 142 XP002086828
- PATENT ABSTRACTS OF JAPAN vol. 008, no. 277 (E-285), 18. Dezember 1984 & JP 59 144358 A (KOORARU ONKIYOU KK), 18. August 1984

## Beschreibung

Die Erfindung bezieht sich auf einen elektromotorischen Verstellantrieb mit einem beweglichen Teil und einem feststehenden Teil, das wenigstens ein zur Erzeugung eines Magnetflusses, insbesondere eines konstanten Magnetflusses, vorgesehenes erstes Erregerteil und wenigstens ein zur Erzeugung eines in der Amplitude veränderbaren Magnetflusses vorgesehenes zweites Erregerteil aufweist, wobei zur Führung des von dem ersten Erregerteil erzeugten Magnetflusses wenigstens ein erster und ein zweiter magnetischer Kreis vorgesehen sind, wobei der magnetische Widerstand des ersten und des zweiten magnetischen Kreises mittels der Position des beweglichen Teils steuerbar ist und wobei das zweite Erregerteil in dem zweiten magnetischen Kreis angeordnet ist.

Ein derartiger elektromotorischer Verstellantrieb ist aus dem Artikel "Performance prediction of Laws Relay actuator", IEE Proceedings, Vol. 137, Pt. B, No. 1, Jan. 1990, Seiten 1 bis 13, von H.R. Bolton und Y. Shakweh, bekannt. Dieser bekannte elektromotorische Verstellantrieb wird auch als Laws Relay bezeichnet und weist als bewegliches Teil einen weichmagnetischen Rotor mit zwei Rotorpolschuhen sowie als feststehendes Teil einen Stator mit vier symmetrisch über den Umfang verteilten Statorpolschuhen auf. Der Stator weist zwei Permanentmagnete auf, die einen konstanten Magnetfluß erzeugen, sowie zwei Erregerspulen, mittels derer ein in der Amplitude veränderbarer Magnetfluß erzeugt werden kann. Die vier Statorpolschuhe und die zwei Rotorpolschuhe dieses bekannten elektromotorischen Verstellantriebes weisen jeweils den gleichen Umfangswinkel auf. Der maximal mögliche Verstellwinkel dieses elektromotorischen Verstellantriebs ist jeweils so groß wie der Umfangswinkel der Stator- und der Rotorpolschuhe. Da am Umfang des Luftspaltes sowohl für die Permanentmagnete als auch für die Erregerspulen Platz benötigt wird, ist der maximale Verstellbereich dieses Verstellantriebes auf Werte unterhalb von 90° begrenzt.

US 1 213 673 offenbart einen Stellantrieb gemäß den Oberbegriffen der Ansprüche 1 und 4.

Es ist Aufgabe der Erfindung, einen alternativen elektromotorischen Verstellantrieb der eingangs genannten Art zu schaffen.

Diese Aufgabe wird gelöst durch einen Stellantrieb gemäß Anspruch 1 und einen Stellantrieb gemäß Anspruch 4.

Das erste Erregerteil ist sowohl in dem ersten als auch in dem zweiten magnetischen Kreis angeordnet, so daß sich der von dem ersten Erregerteil erzeugte Magnetfluß, der vorzugsweise konstant ist, über den ersten und/oder über den zweiten magnetischen Kreis schließen kann. Das zweite Erregerteil ist nur in dem zweiten magnetischen Kreis angeordnet. Es ist vorzugsweise als Erregerspule ausgebildet, wobei mittels Variation des Erregerstromes ein in der Amplitude veränderbarer Magnetfluß erzeugt werden kann. Das bewegliche Teil, das vorzugsweise weichmagnetisch ausgebildet ist, ist sowohl in dem ersten als auch in dem zweiten magnetischen Kreis derart angeordnet, daß sich der Widerstand des ersten und des zweiten magnetischen Kreises in Abhängigkeit der Position des beweglichen Teils ändert. Vorzugsweise sind das bewegliche Teil und das feststehende Teil so ausgeführt, daß sich bei Bewegung des beweglichen Teils der Widerstand des ersten magnetischen Kreises und der Widerstand des zweiten magnetischen Kreises gegensinnig ändern, d.h., daß bei einer Bewegung des beweglichen Teils in einer ersten Richtung der Widerstand des ersten magnetischen Kreises zunimmt und der Widerstand des zweiten magnetischen Kreises abnimmt und daß bei Drehung des beweglichen Teils in der entgegengesetzten zweiten Richtung der Widerstand des ersten magnetischen Kreises abnimmt und der Widerstand des zweiten magnetischen Kreises zunimmt. Der erfindungsgemäße elektromotorische Verstellantrieb weist wenigstens drei Polschuhe auf, von denen der erste im ersten magnetischen Kreis, der zweite im zweiten magnetischen Kreis und der dritte in beiden magnetischen Kreisen, d.h. sowohl in dem ersten als auch in dem zweiten magnetischen Kreis angeordnet ist. Der dritte Polschuh wird somit in beiden magnetischen Kreisen als flußführendes Element benutzt. Der Verstellantrieb läßt sich daher mit drei Polschuhen des feststehenden Teils realisieren. Dies hat insbesondere bei einem rotierenden Verstellantrieb den Vorteil, daß sich maximale Verstellwinkelbereiche von mehr als 90° realisieren lassen. Bei symmetrischer Anordnung der drei Polschuhe des feststehenden Teils stehen bei einem rotierenden Verstellantrieb jeweils ca. 120° als Umfangswinkel zur Verfügung. Damit läßt sich auch bei Berücksichtigung des für das erste und das zweite Erregerteil erforderlichen Umfangswinkels ein Stellbereich von mehr als 90° sicher realisieren.

Der von dem dritten Erregerteil erzeugte Magnetfluß ist vorzugsweise in etwa genauso groß wie der von dem ersten Erregerteil erzeugte Magnetfluß. Dadurch kann das Drehmoment des elektromotorischen Verstellantriebs verdoppelt werden. In einer ersten Maximalposition des beweglichen Teils wird der von dem dritten Erregerteil erzeugte magnetische Fluß im wesentlichen über den vierten magnetischen Kreis und der von dem ersten Erregerteil erzeugte magnetische Fluß im wesentlichen über den ersten magnetischen Kreis geführt. Der von dem dritten Erregerteil erzeugte magnetische Fluß ist daher stark mit dem zweiten Erregerteil verkoppelt, während der von dem ersten Erregerteil erzeugte magnetische Fluß nicht bzw. nur wenig mit dem zweiten Erregerteil verkoppelt ist. In der entgegengesetzten Maximalposition wird der von dem ersten Erregerteil erzeugte magnetische Fluß im wesentlichen über den zweiten magnetischen Kreis und der von dem dritten Erregerteil erzeugte magnetische Fluß im wesentlichen über den dritten magnetischen Kreis geführt. Daher ist in dieser entgegengesetzten zweiten Maximalposition der von dem ersten Erregerteil erzeugte magnetische Fluß mit dem zweiten Erregerteil verkettet, während der von dem dritten Erregerteil erzeugte magnetische Fluß kaum mit dem zweiten Erregerteil verkettet ist.

Die Ausgestaltung der Verstellvorrichtung gemäß Anspruch 5 hat den Vorteil, daß die Permanentmagnete fertigungstechnisch günstig in Nuten des feststehenden Teils eingesetzt werden können. Als Permanentmagnete können quaderförmige Blöcke verwendet werden, die sich sehr kostengünstig herstellen lassen. Da die Permanentmagnete auf dem feststehenden Teil angeordnet sind, kann das feststehende Teil an dem Ort der Permanentmagnete nach außen hin erweitert werden, um eine Flußfokussierung zu ermöglichen. Dies ist insbesondere bei der vorteilhaften Ausgestaltung der Verstellvorrichtung gemäß Anspruch 7 günstig. Ferritmagnete sind kostengünstiger als beispielsweise NdFeB-Magnete, sie weisen jedoch eine geringere magnetische Flußdichte auf und benötigen daher mehr Bauraum.

Der von dem zweiten Erregerteil erzeugte magnetische Fluß kann im wesentlichen über den ersten Polschuh, das bewegliche Teil und den zweiten Polschuh zu dem ersten Erregerteil zurückgeführt werden. Über den dritten Polschuh fließt nahezu kein von dem zweiten Erregerteil erzeugter magnetischer Fluß. Dies bedeutet, daß das Reluktanzmoment im wesentlichen von der Luftspaltgeometrie des Luftspaltes zwischen dem ersten Polschuh und dem beweglichen Teil und dem zweiten Polschuh und dem beweglichen Teil bestimmt wird. Der Luftspalt zwischen dem dritten Polschuh und dem beweglichen Teil hat nur einen sehr geringen Einfluß auf das Reluktanzmoment. Dadurch wird es möglich, das Reluktanzmoment durch eine entsprechende Gestaltung des Luftspaltes zwischen dem beweglichen Teil und dem ersten und dem zweiten Polschuh zu minimieren bzw. zu eliminieren und das Klebemoment durch entsprechende Gestaltung des Luftspaltes zwischen dem feststehenden Teil und dem dritten Polschuh zu minimieren bzw. zu eliminieren. Somit ergibt sich ein elektromotorischer Verstellantrieb, dessen Gesamtdrehmoment praktisch kein Klebemoment und kein Reluktanzmoment aufweist, sondern nur aus einem Hybriddrehmoment besteht, das über den gesamten Verstellbereich des Rotors nahezu konstant ist. Das Hybriddrehmoment entsteht durch die Zusammenwirkung des von dem ersten und dem dritten Erregerteil erzeugten Magnetflusses, des von dem zweiten Erregerteil erzeugten Magnetflusses und der Verkettung dieser einzelnen Magnetflüsse mit der Erregerspule des zweiten Erregerteils.

Es sind jedoch auch andere Drehmomentverläufe durch entsprechende Gestaltung der Oberflächengeometrie der Polschuhe des feststehenden Teils und der Geometrie des beweglichen Teils möglich. Insbesondere können auch unsymmetrische Verläufe der Luftspaltgeometrie verwendet werden und somit die Drehmomentverläufe an unterschiedlichste Anforderungen angepaßt werden. Insbesondere ist es möglich, ein magnetisches Rückstellmoment zu realisieren, das das bewegliche Teil bei ausgeschaltetem Erregerstrom des zweiten Erregerteils in eine definierte Ruheposition bewegt. Ebenso könnten zwei oder mehrere Ruhepositionen realisiert werden, wobei es von der Position und der Geschwindigkeit des beweglichen Teils beim Abschalten des Stromes des zweiten Erregerteils abhängt, welche dieser Ruhepositionen das bewegliche Teil einnimmt.

Die Ausgestaltung des Verfahrens gemäß Anspruch 2 hat den Vorteil, daß der maximale Stellbereich der Verstellvorrichtung auch auf Werte von > 120° ausgeweitet werden kann. Der maximale Verstellbereich wird im wesentlichen durch dem Umfangswinkel des ersten und des zweiten Polschuhes des feststehenden Teils bestimmt. Dementsprechend erhöht sich der maximal mögliche Verstellbereich, wenn der Umfangswinkel des dritten Polschuhes zugunsten der Umfangswinkel des ersten und des zweiten Polschuhes verkleinert wird.

Der Stellantrieb kann auch als Linearaktuator ausgeführt werden. Ein derartiger Linearaktuator ist insbesondere zur Betätigung eines Türschließmechanismus verwendbar.

Ist der erfindungsgemäße Stellantrieb als Drehaktuator ausgeführt, so kann damit vorzugsweise eine Drosselklappe betätigt werden, die in einer Leitung eines Verbennungsmotors zur Steuerung eines Gas- oder Flüssigkeitsstromes vorgesehen ist.

Einige schematisch dargestellte Ausführungsbeispiele der Erfindung werden nachfolgend anhand der Zeichnung in den Fig. 1 bis 9 näher erläutert. Es zeigen:
Fig. 1 einen als Drehaktuator ausgeführten elektromotorischen Verstellantrieb mit einem weichmagnetischen Rotor und einem feststehenden Stator, der drei Polschuhe, zwei Permanentmagnete und zwei Erregerspulen aufweist, wobei sich der weichmagnetische Rotor in einer ersten Maximalposition befindet,
Fig. 2 den elektromotorischen Verstellantrieb gemäß Fig.1, wobei sich der Rotor in einer Mittelposition befindet,
Fig. 3 den Verstellantrieb gemäß Fig.1, wobei sich der Rotor in einer zweiten Maximalposition befindet,
Fig. 4 eine abgeänderte Ausführungsform des elektromotorischen Verstellantriebes gemäß Fig.1, wobei der Luftspalt zwischen dem Rotor und einem ersten und zweiten Polschuh des Stators zur Minimierung des Reluktanzmomentes ungleichförmig ausgebildet ist,
Fig. 5 eine vorteilhafte Ausgestaltung des elektromotorischen Verstellantriebes gemäß Fig.4, wobei der Luftspalt zwischen dem Rotor und dem dritten Statorpolschuh zur Minimierung des Klebemomentes ungleichförmig ausgebildet ist,
Fig. 6 einen elektromotorischen Verstellantrieb, der als Linearaktuator ausgeführt ist, in einer Mittelposition,
Fig. 7 den Linearaktuator gemäß Fig.6 in einer ersten Maximalposition und
Fig. 8 den Linearaktuator gemäß Fig.6 in einer zweiten Maximalposition,
Fig. 9 eine abgeänderte Ausführungsform des Linearaktuators gemäß Fig.6, wobei der Linearaktuator kastenförmig konstruiert ist, um eine kompakte Bauweise zu realisieren.

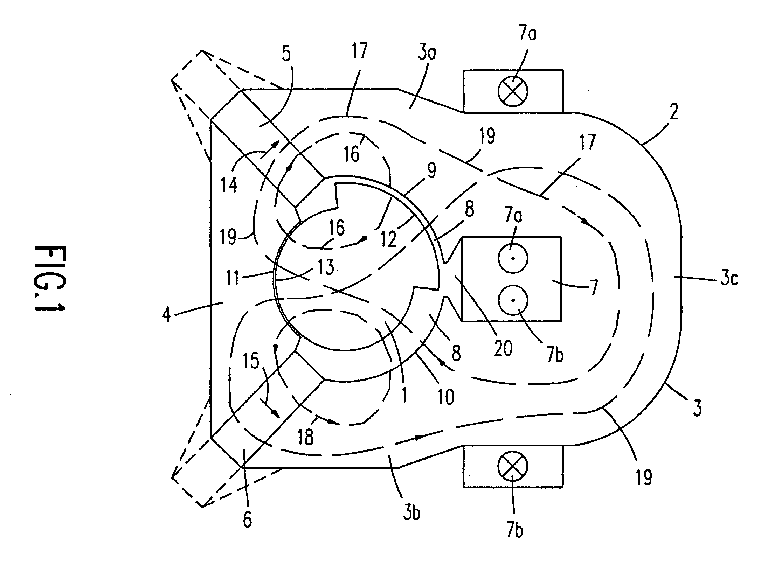

Fig. 1 zeigt einen als Drehaktuator ausgeführten elektromotorischen Verstellantrieb. Dieser elektromotorische Verstellantrieb weist als bewegliches Teil einen weichmagnetischen Rotor 1 und als feststehendes Teil einen Stator 2 auf. Der Stator 2 weist ein erstes weichmagnetisches Eisenjoch 3 und ein zweites weichmagnetisches Eisenjoch 4 auf. Das erste weichmagnetische Eisenjoch 3 ist U-förmig ausgebildet. Es weist einen ersten Schenkel 3a, einen zweiten Schenkel 3b sowie ein Verbindungsstück 3c auf. Am Ende des ersten Schenkels 3a ist als erstes Erregerteil ein erster Permanentmagnet 5 und am Ende des zweiten Schenkels 3b als drittes Erregerteil ein zweiter Permanentmagnet 6 angeordnet. Der erste Permanentmagnet 5 und der zweite Permanentmagnet 6 sind quaderförmig ausgebildet. Dadurch lassen sich diese fertigungstechnisch günstig herstellen. Der erste Permanentmagnet 5 und der zweite Permanentmagnet 6 sind mittels des zweiten Eisenjoches 4 miteinander verbunden, so daß der erste Permanentmagnet 5, das erste Eisenjoch 3, der zweite Permanentmagnet 6 und das zweite Eisenjoch 4 einen geschlossenen magnetischen Kreis bilden. Der Stator 2 weist als zweites Erregerteil eine Statorspule 7 auf, welche eine erste Statorwicklung 7a und eine zweite Statorwicklung 7b umfaßt. Die Statorspule 7 ist in einer Nut 20 des ersten weichmagnetischen Eisenjoches 3 angeordnet. Der Rotor 1 ist innerhalb des Stators 2 angeordnet und durch einen Luftspalt 8 von dem Stator 2 getrennt. Die Permanentmagnete 5 und 6 können sowohl als Ferritmagnete als auch als NdFeB-Magnete ausgeführt sein. Da Ferritmagnete eine kleinere magnetische Flußdichte erzeugen, kann es erforderlich sein, die Permanentmagnete 5 und 6 in der in der Fig. gestrichelt gezeichneten Weise zu verlängern. In entsprechender Weise ist es dann vorteilhaft, den Stator 2 in der in der Fig.1 gestrichelt gezeichneten Weise im Bereich der Permanentmagnete 5 bzw. 6 zu erweitern, um eine Flußfokussierung zu ermöglichen. Der erste Schenkel 3a des ersten Eisenjoches 3 weist einen ersten Polschuh 9, der zweite Schenkel 3b des ersten Eisenjoches 3 einen zweiten Polschuh 10 und das zweite Eisenjoch 4 einen dritten Polschuh 11 auf. Der Rotor 1 weist einen ersten Rotorpolschuh 12 und einen zweiten Rotorpolschuh 13 auf, wobei der erste Rotorpolschuh 12 zur Zusammenarbeit mit dem ersten Statorpolschuh 9 und dem zweiten Statorpolschuh 10 vorgesehen ist und der zweite Rotorpolschuh 13 zur Zusammenarbeit mit dem dritten Statorpolschuh 11 vorgesehen ist. Der erste Permanentmagnet 6 erzeugt einen ersten konstanten Magnetfluß 14, der in Richtung auf das erste Eisenjoch 3 gerichtet ist, und der zweite Permanentmagnet 6 erzeugt einen zweiten konstanten Magnetfluß 15, der ebenfalls in Richtung auf das erste Eisenjoch 3 gerichtet ist. Zur Führung des von dem ersten Permanentmagneten 5 erzeugten ersten Magnetflusses 14 ist im wesentlichen ein erster magnetischer Kreis 16 und ein zweiter magnetischer Kreis 17 vorgesehen. Der erste magnetische Kreis 16 verläuft von dem ersten Permanentmagneten 5 über den Schenkel 3a des ersten Eisenjoches 3, den ersten Statorpolschuh 9, den Rotor 1, den dritten Statorpolschuh 11 und über das zweite Eisenjoch 4 zurück zu dem ersten Permanentmagneten 5. Der zweite magnetische Kreis 17 umfaßt den ersten Permanentmagneten 5, den ersten Schenkel 3a des ersten Eisenjoches 3, das Verbindungsstück 3c, die Statorspule 7, den zweiten Schenkel 3b, den zweiten Statorpolschuh 10, den Rotor 1, den dritten Statorpolschuh 11 und das zweite Eisenjoch 4. Zur Führung des von dem zweiten Permanentmagneten 6 erzeugten zweiten Magnetflusses 15 ist ein dritter magnetischer Kreis 18 und ein vierter magnetischer Kreis 19 vorgesehen. Der dritte magnetische Kreis 18 umfaßt den zweiten Permanentmagneten 6, den zweiten Schenkel 3b des ersten Eisenjoches 3, den zweiten Statorpolschuh 10, den Rotor 1, den dritten Statorpolschuh 11 sowie das zweite Eisenjoch 4. Der vierte magnetische Kreis 19 umfaßt den zweiten Permanentmagneten 6, den zweiten Schenkel 3b des ersten Eisenjoches 3, das Verbindungsstück 3c, die Statorspule 7, den ersten Schenkel 3a, den ersten Statorpolschuh 9, den Rotor 1, den dritten Statorpolschuh 11 sowie das zweite Eisenjoch 4. Die Widerstände der magnetischen Kreise 16 bis 19 sind jeweils abhängig von der Position des Rotors 1. Die Fig.1 zeigt den Rotor 1 in der ersten Maximalposition, in der der erste Rotorpolschuh 12 dem ersten Statorpolschuh 9 gegenüberliegt. In dieser ersten Maximalposition ist der Widerstand des ersten magnetischen Kreises 16 und des vierten magnetischen Kreises 19 relativ gering, während der Widerstand des zweiten magnetischen Kreises 17 und des dritten magnetischen Kreises 18 relativ groß ist. Daher wird der von dem ersten Permanentmagneten 5 erzeugte erste Magnetfluß 14 im wesentlichen im ersten magnetischen Kreis 16 geführt und der von dem zweiten Permanentmagneten 6 erzeugte zweite Magnetfluß 15 im wesentlichen in dem vierten magnetischen Kreis 19. Der erste Magnetfluß 14 ist daher fast gar nicht mit der Statorspule 7 verkettet, während der zweite Magnetfluß 15 fast vollständig mit der Statorspule 7 verkoppelt ist.

Die Statorspule 7 wird mittels einer nicht näher dargestellten Vorrichtung mittels eines Erregerstromes gespeist. Dieser Erregerstrom kann in der Amplitude und in der Richtung gesteuert werden, so daß auch der von der Statorspule 7 erzeugte Magnetfluß in Amplitude und Richtung veränderbar ist. Mittels Steuerung des Erregerstromes der Statorspule 7 kann die Winkelstellung des Rotors 1 gesteuert werden. In der in der Fig.1 gezeigten ersten Maximalposition wird der Statorstrom so in Richtung und Amplitude gesteuert, daß sich in der gezeigten Position ein Gleichgewicht zwischen Antriebsdrehmoment und Gegendrehmoment ergibt.

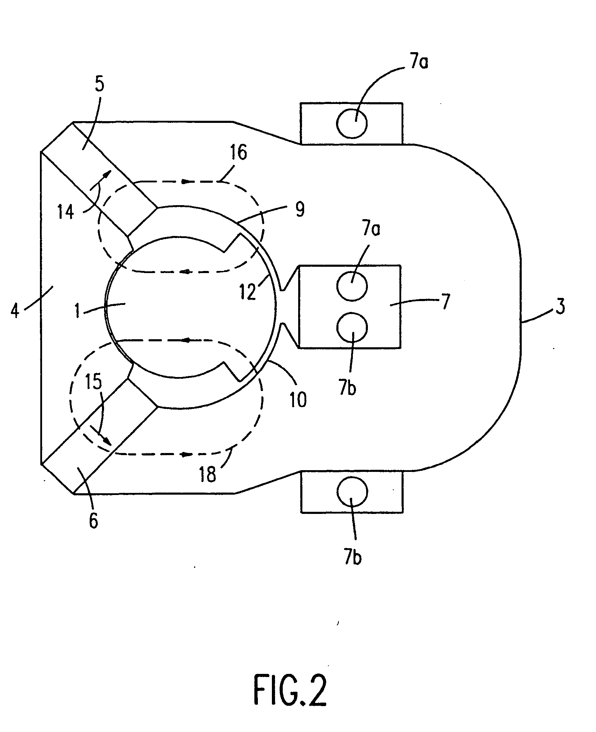

Fig.2 zeigt den elektromotorischen Verstellantrieb gemäß Fig. 1 mit dem Stator 1 in einer Mittelposition. In dieser Mittelposition ist der Erregerstrom der Statorspule 7 ausgeschaltet, so daß sich der erste Rotorpolschuh 12 symmetrisch zu dem ersten Statorpolschuh 9 und dem zweiten Statorpolschuh 10 ausrichtet. Der von dem ersten Permanentmagneten 5 erzeugte erste Magnetfluß 14 wird im wesentlichen im ersten magnetischen Kreis 16 geführt, und der von dem zweiten Permanentmagneten 6 erzeugte zweite Magnetfluß 15 wird im wesentlichen im dritten Magnetkreis 18 geführt.

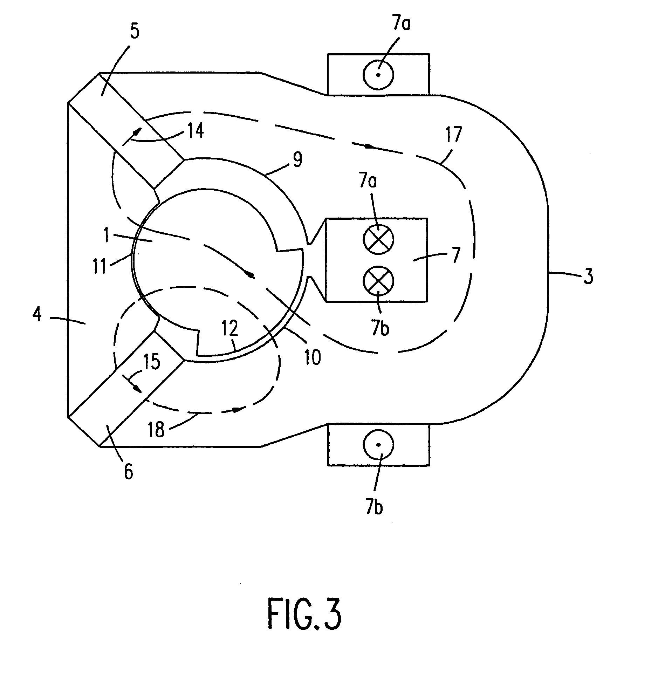

Fig.3 zeigt den elektromotorischen Verstellantrieb gemäß Fig. 1 in einer zweiten Maximalposition. In dieser zweiten Maximalposition wird die Statorspule 7 von einem Erregerstrom durchflossen, der entgegengesetzt zu dem Erregerstrom gemäß der in Fig.1 gezeigte ersten Maximalposition gerichtet ist. Die zweite Maximalposition ist um ca. 95° im Uhrzeigersinn gegenüber der in der Fig. 1 gezeigten ersten Maximalposition versetzt. In dieser zweiten Maximalposition liegt der erste Rotorpolschuh 12 dem zweiten Statorpolschuh 10 gegenüber. In dieser zweiten Maximalposition ist der Widerstand des ersten magnetischen Kreises 16 und des vierten magnetischen Kreises 19 relativ groß, während der Widerstand des zweiten magnetischen Kreises 17 und des dritten magnetischen Kreises 18 relativ klein ist. Der von dem ersten Permanentmagneten 5 erzeugte erste Magnetfluß 14 wird daher im wesentlichen im zweiten magnetischen Kreis 17 geführt, und der von dem zweiten Permanentmagneten 6 erzeugte zweite Magnetfluß 15 wird im wesentlichen in dem dritten magnetischen Kreis 18 geführt. Somit ist der erste magnetische Fluß 14 nahezu komplett mit der Statorspule 7 verkettet, während der zweite Magnetfluß 15 fast gar nicht mit der Statorspule 7 verkettet ist.

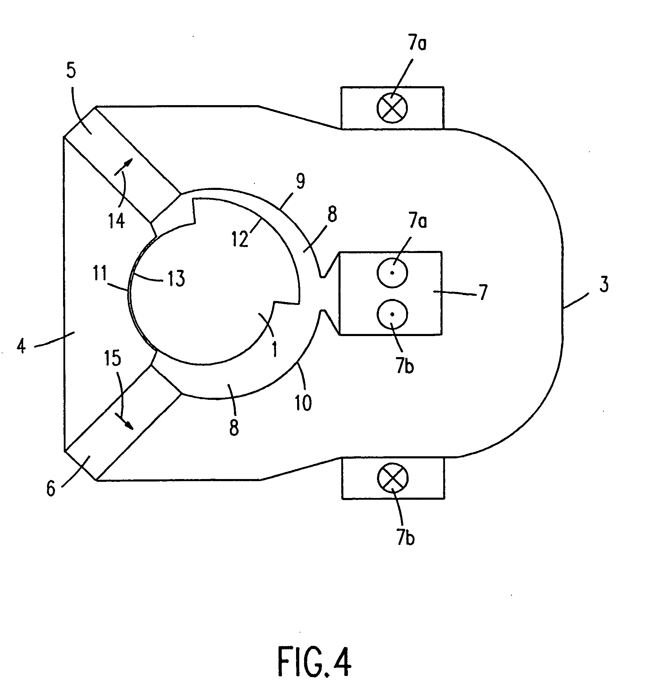

Fig.4 zeigt einen elektromotorischen Verstellantrieb gemäß Fig.1, wobei sich die Breite des Luftspaltes 8 zwischen dem ersten Rotorpolschuh 12 und dem ersten und dem zweiten Statorpolschuh 9 bzw. 10 sich entlang des Umfangswinkels des ersten Statorpolschuhes 9 bzw. des zweiten Statorpolschuhes 10 ändert. Der erste Statorpolschuh 9 und der zweite Statorpolschuh 10 weisen keinen konstanten Radius mehr auf. Der Abstand zwischen dem ersten Statorpolschuh 9 und dem Mittelpunkt des Rotors 1 nimmt entgegen dem Uhrzeigersinn in Richtung auf den ersten Permanentmagneten 5 kontinuierlich ab. In entsprechender Weise nimmt der Abstand zwischen dem zweiten Statorpolschuh 10 und dem Mittelpunkt des Rotors 1 im Uhrzeigersinn in Richtung auf den zweiten Permanentmagneten 6 kontinuierlich ab. Dadurch wird das Reluktanzmoment, das durch das Zusammenwirken von Stator 2, Rotor 1 und dem von der Statorspule 7 erzeugten Magnetfluß entsteht, kompensiert.

Das zweite Eisenjoch 4 führt im wesentlichen nur den von dem ersten Permanentmagneten 5 erzeugten ersten Magnetfluß 14 und den von dem zweiten Permanentmagneten 6 erzeugten zweiten Magnetfluß 15. Da die Permanentmagnete 5 und 6 für den von der Statorspule 7 erzeugten magnetischen Fluß einen großen magnetischen Widerstand darstellen, führt das zweite Eisenjoch 4 fast gar keinen von der Statorspule 7 erzeugten magnetischen Fluß. Daher wird das Reluktanzmoment fast ausschließlich durch den Luftspalt zwischen dem ersten Statorpolschuh 9 bzw. dem zweiten Statorpolschuh 10 und dem ersten Rotorpolschuh 12 bestimmt.

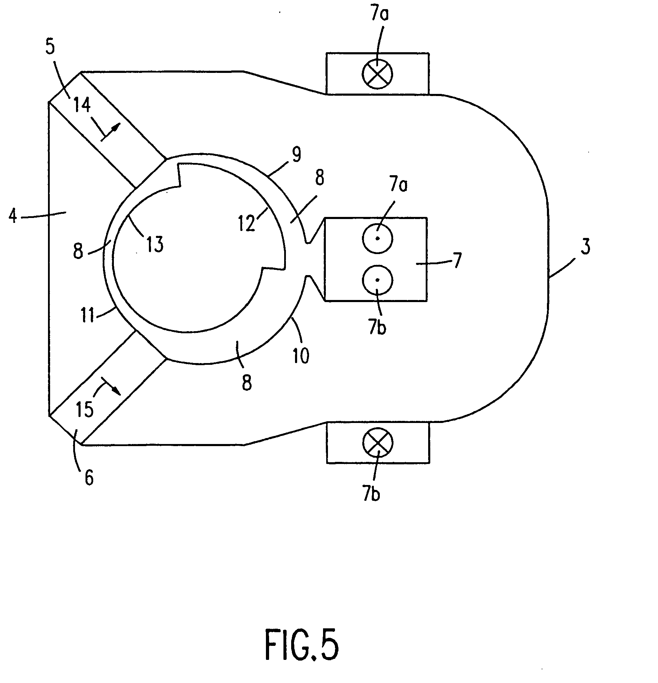

Diese Eigenschaft wird in der in der Fig.5 gezeigten Anordnung ausgenutzt, um einen elektromotorischen Verstellantrieb zu schaffen, bei dem sowohl das Klebemoment als auch das Reluktanzmoment eliminiert sind.

Der erste Statorpolschuh 9, der zweite Statorpolschuh 10 sowie der erste Rotorpolschuh 12 der in der Fig.5 gezeigten elektromotorischen Verstellvorrichtung sind identisch zu dem in Fig.4 beschriebenen Aufbau. Durch die unsymmetrische Ausgestaltung des Luftspaltes 8 zwischen dem ersten Rotorpolschuh 12 und dem ersten und dem zweiten Statorpolschuh 9 bzw. 10 wird ein zusätzliches Klebemoment erzeugt, das durch die Wechselwirkung zwischen dem ersten Permanentmagneten 5, dem zweiten Permanentmagneten 6 und den weichmagnetischen Komponenten des Stellantriebs entsteht. Dieses Klebemoment wird bei der in der Fig.5 gezeigten Anordnung durch eine entsprechende Ausgestaltung des Luftspaltes 8 zwischen dem dritten Statorpolschuh 11 und dem zweiten Rotorpolschuh 13 kompensiert. Durch diese Kompensation des Klebemomentes mittels der Gestaltung des Luftspaltes 8 zwischen dem dritten Statorpolschuh 11 und dem zweiten Rotorpolschuh 13 wird kein zusätzliches Reluktanzmoment erzeugt, da, wie bereits beschrieben, der von der Statorspule 7 erzeugte magnetische Fluß fast gar nicht über den Luftspalt 8 von dem dritten Statorpolschuh 11 zu dem zweiten Rotorpolschuh 13 fließt.

Somit besteht das Gesamtdrehmoment des in der Fig.5 gezeigten elektromotorischen Verstellantriebes praktisch nur aus dem für Positionieraufgaben erwünschten Hybriddrehmoment. Sowohl das Klebemoment als auch das Reluktanzmoment sind weitgehend kompensiert. Für eine weitere detaillierte Anpassung des Drehmomentes an die Anforderungen einer speziellen Anwendung kann es sinnvoll sein, auch der Geometrie der Oberfläche des ersten Rotorpolschuhes 12 eine besondere Gestalt zu geben. Insgesamt ist es möglich, durch entsprechende Gestaltung des Luftspaltes 8 die Drehmomentverläufe auf vielfältige Weise an unterschiedlichste Anforderungen anzupassen.

Es wäre auch möglich, den ersten Permanentmagneten 5 und/oder den zweiten Permanentmagneten 6 durch Erregerspulen mit einem weichmagnetischen Kern zu ersetzen. Dadurch würde sich ein Verstellantrieb mit einem sehr großen Arbeitsbereich ergeben.

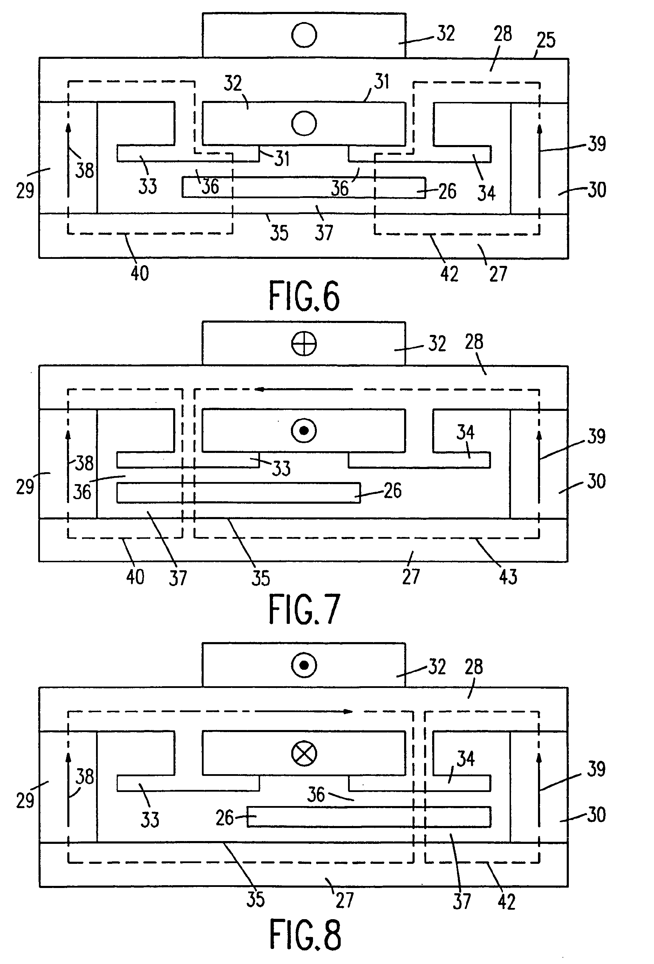

Fig.6 zeigt einen elektromotorischen Verstellantrieb, der als Linearaktuator ausgeführt ist. Der Linearaktuator weist ein feststehendes Teil 25 sowie als bewegliches Teil einen länglichen Kolben 26 auf. Das feststehende Teil 25 weist ein erstes Eisenjoch 27 und ein zweites Eisenjoch 28 auf. Das erste Eisenjoch 27 und das zweite Eisenjoch 28 sind mittels eines ersten Permanentmagneten 29 und eines zweiten Permanentmagneten 30 miteinander verbunden. Das zweite Eisenjoch 28 weist eine Nut 31 auf, in der eine Erregerspule 32 angeordnet ist. Das zweite Eisenjoch 28 weist einen ersten Polschuh 33 und einen zweiten Polschuh 34 auf. Das erste Eisenjoch 27 weist einen dritten Polschuh 35 auf. Der erste Polschuh 33 und der zweite Polschuh 34 sind mittels eines ersten Luftspaltes 36 von dem Kolben 26 getrennt. Der dritte Polschuh 35 ist mittels eines Luftspaltes 37 von dem Kolben 26 getrennt.

Der erste Permanentmagnet 29 erzeugt einen ersten Magnetfluß 38, und der zweite Permanentmagnet 30 erzeugt einen zweiten Magnetfluß 29.

In der in der Fig.6 gezeigten Stellung befindet sich der Kolben 26 in einer Mittelposition. Die Erregerspule 32 wird nicht von einem Erregerstrom durchflossen. Der von dem ersten Permanentmagneten 29 erzeugte Magnetfluß 38 wird im wesentlichen in einem ersten magnetischen Kreis 40 und der von dem zweiten Permanentmagneten 30 erzeugte magnetische Fluß 39 wird im wesentlichen in einem dritten magnetischen Kreis 42 geführt.

Der erste magnetische Kreis 40 umfaßt den ersten Permanentmagneten 29, das zweite Eisenjoch 28, den ersten Polschuh 33, den ersten Luftspalt 36, den Kolben 26, den zweiten Luftspalt 37, den dritten Polschuh 35 sowie das erste Eisenjoch 27.

Der dritte magnetische Kreis 42 umfaßt den zweiten Permanentmagneten 30, das zweite Eisenjoch 28, den zweiten Polschuh 34, den ersten Luftspalt 36, den Kolben 26, den zweiten Luftspalt 37, den dritten Polschuh 35 sowie das erste Eisenjoch 27.
In der in der Fig.6 gezeigten Mittelposition ist weder der von dem ersten Permanentmagneten 29 erzeugte erste Magnetfluß 38 noch der von dem zweiten Permanentmagneten 30 erzeugte zweite Magnetfluß 39 mit der Erregerspule 32 verkettet.

Fig.7 zeigt den Linearaktuator gemäß Fig.6 in einer ersten Maximalposition, in der der Kolben 26 gegenüber der in der Fig.6 gezeigten Mittelposition nach links verschoben ist. Der Kolben 26 ist in dieser ersten Maximalposition derart angeordnet, daß sich eine maximale Überdeckung zwischen dem ersten Polschuh 33 und dem Kolben 26 ergibt. Der von dem ersten Permanentmagneten 29 erzeugte erste Magnetfluß 38 wird weiterhin in dem ersten Magnetkreis 40 geführt. Der von dem zweiten Permanentmagneten 30 erzeugte zweite Magnetfluß 39 wird dagegen in einem vierten Magnetkreis 43 geführt. Der vierte magnetische Kreis 43 umfaßt den zweiten Permanentmagneten 30, das zweite Eisenjoch 28, die Erregerspule 32, den ersten Polschuh 33, den ersten Luftspalt 36, den Kolben 26, den zweiten Luftspalt 37, den dritten Polschuh 35 sowie das erste Eisenjoch 27. In dieser in der Fig.6 dargestellten ersten Maximalposition ist der erste Magnetfluß 38 nicht mit der Erregerspule 32 verkettet, während der zweite Magnetfluß 39 fast vollständig mit der Erregerspule 32 verkettet ist. Der Strom in der Erregerspule 32 ist so gerichtet, daß der von der Erregerspule 32 erzeugte Magnetfluß die gleiche Richtung aufweist wie der von dem zweiten Permanentmagneten 30 erzeugte zweite magnetische Fluß 39.

Fig.8 zeigt den Linearaktuator in einer zweiten Maximalposition, in der der Kolben 26 gegenüber der Mittelposition nach rechts verschoben ist. Der Kolben 26 ist so angeordnet, daß sich eine maximale Überdeckung zwischen dem Kolben 26 und dem zweiten Polschuh 34 ergibt. Der von dem zweiten Permanentmagneten 30 erzeugte zweite magnetische Fluß 39 wird im wesentlichen über den dritten magnetischen Kreis 42 geführt. Der von dem ersten Permanentmagneten 39 erzeugte erste Magnetfluß 38 wird über einen zweiten magnetischen Kreis 41 geführt. Dieser zweite magnetische Kreis 41 umfaßt den ersten Permanentmagneten 29, das zweite Eisenjoch 28, die Erregerspule 32, den zweiten Polschuh 34, den ersten Luftspalt 36, den Kolben 26, den zweiten Luftspalt 37, den dritten Polschuh 35 sowie das erste Eisenjoch 27. Somit ist der erste Magnetfluß 38 fast vollständig mit der Erregerspule 32 verkettet, während der zweite Magnetfluß 39 fast gar nicht mit der Erregerspule 32 verkettet ist. Der Erregerstrom in der Erregerspule 32 ist so gerichtet, daß der von der Erregerspule 32 erzeugte Magnetfluß in Richtung des von dem ersten Permanentmagneten 29 erzeugten ersten Magnetflusses 38 gerichtet ist.

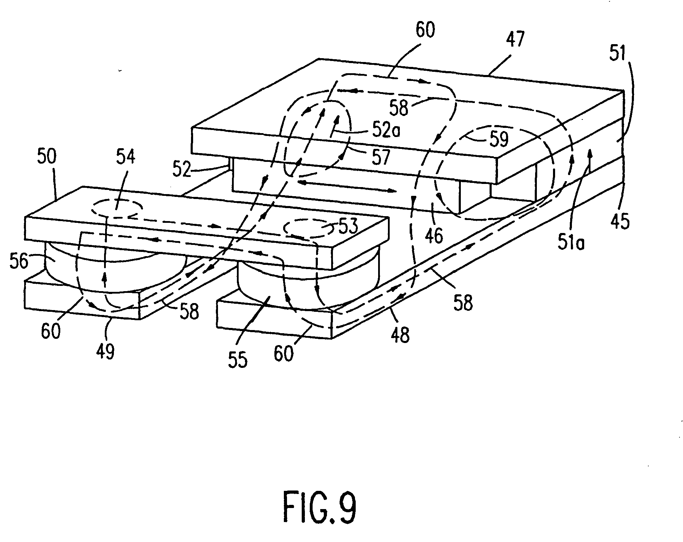

Fig.9 zeigt eine abgeänderte Ausführungsform des Linearaktuators gemäß Fig.6. Der Linearaktuator gemäß Fig.9 ist kastenförmig konstruiert, um einen geringen Bauraum zu realisieren. Der Linearaktuator gemäß Fig.9 weist ein feststehendes Teil 45 sowie als bewegliches Teil einen Kolben 46 auf. Das feststehende Teil 45 weist ein erstes Eisenjoch 47, ein zweites Eisenjoch 48, ein drittes Eisenjoch 49 und ein viertes Eisenjoch 50 auf. Das erste Eisenjoch 47 ist mittels eines ersten Permanentmagneten 51 mit dem zweiten Eisenjoch 48 verbunden. Der erste Permanentmagnet 51 erzeugt einen konstanten Magnetfluß 51a. Das erste Eisenjoch 47 ist mittels eines zweiten Permanentmagneten 52, der in Fig. 9 von dem ersten Eisenjoch 47 weitgehend verdeckt ist, mit dem dritten Eisenjoch 49 verbunden. Der zweite Permanentmagnet 52 erzeugt einen konstanten Magnetfluß 52a. Das zweite Eisenjoch 48 und das vierte Eisenjoch 50 sind mittels eines zylinderförmigen fünften Eisenjoches 53 verbunden, welches als Träger einer ersten Erregerspule 55 vorgesehen ist. Das dritte Eisenjoch 49 ist mittels eines zylinderförmigen sechsten Eisenjoches 54 mit dem vierten Eisenjoch 50 verbunden, wobei das sechste Eisenjoch 54 als Träger einer zweiten Erregerspule 56 vorgesehen ist. Die Funktionsweise des in der Fig.9 gezeigten Linearaktuators ist entsprechend der Funktionsweise des zu den Fig.6 bis 8 beschriebenen Linearaktuators. Dementsprechend ist ein erster magnetischer Kreis 57, ein zweiter magnetischer Kreis 58, ein dritter magnetischer Kreis 59 und ein vierter magnetischer Kreis 60 vorgesehen. Der erste magnetische Kreis 57 umfaßt das erste Eisenjoch 47, den Kolben 46, das dritte Eisenjoch 49 und den zweiten Permanentmagneten 52. Der dritte magnetische Kreis 59 umfaßt das erste Eisenjoch 47, den Kolben 46, das zweite Eisenjoch 48 sowie den ersten Permanentmagneten 51. Der zweite magnetische Kreis 58 umfaßt den ersten Permanentmagneten 51, das erste Eisenjoch 47, den Kolben 46, das dritte Eisenjoch 49, das sechste Eisenjoch 54 mit der zweiten Erregerspule 56, das vierte Eisenjoch 50, das fünfte Eisenjoch 53 mit der ersten Erregerspule 55 sowie das zweite Eisenjoch 48. Der vierte magnetische Kreis 60 umfaßt den zweiten Permanentmagneten 52, das erste Eisenjoch 47, den Kolben 46, das zweite Eisenjoch 48, das fünfte Eisenjoch 53 mit der ersten Erregerspule 55, das vierte Eisenjoch 50, das sechste Eisenjoch 54 mit der zweiten Erregerspule 56, sowie das dritte Eisenjoch 49.

## Patentansprüche

1. Elektromotorischer Stellantrieb mit einem beweglichen Teil (1) und einem feststehenden Teil (2), das wenigstens ein zur Erzeugung eines Magnetflusses vorgesehenes erstes Erregerteil (5) und wenigstens ein zur Erzeugung eines in der Amplitude veränderbaren Magnetflusses vorgesehenes zweites Erregerteil (7) aufweist, wobei zur Führung des vom ersten Erregerteil (5) erzeugten Magnetflusses wenigstens ein erster (16) und ein zweiter (17) magnetischer Kreis vorgesehen sind, wobei der magnetische Widerstand des ersten (16) und des zweiten (17) magnetischen Kreises mittels der Position des beweglichen Teils (1) steuerbar ist und das zweite Erregerteil (7) im zweiten magnetischen Kreis (17) angeordnet ist, wobei das feststehende Teil (2) wenigstens einen ersten (9), einen zweiten (10) Polschuh aufweist, wobei der Stator (2) ein drittes Erregerteil (6) und einen zwischen dem ersten (5) und dem dritten Erregerteil (6) angeordneten dritten Polschuh (11) aufweist, wobei der erste (9) und der dritte (11) Polschuh des Stators flussführende Elemente des ersten magnetischen Kreises (16) und der zweite (10) und der dritte (11) Polschuh flussführende Elemente des zweiten magnetischen Kreises (17) sind, **dadurch gekennzeichnet, dass** das bewegliche Teil (1) als Rotor (1) innerhalb des als Stator (2) ausgebildeten feststehenden Teils (2) ausgebildet ist und durch einen Luftspalt (8) vom Stator (2) getrennt ist.

2. Stellantrieb nach Anspruch 1, **dadurch gekennzeichnet, dass** der Stellantrieb als Drehaktuator ausgeführt ist und dass der Umfangswinkel des dritten Polschuhes (11) kleiner als der Umfangswinkel des ersten (9) und des zweiten (10) Polschuhes ist.

3. Elektromotorischer Stellantrieb nach Anspruch 1 oder 2, **dadurch gekennzeichnet, dass** das erste (5) und dritte Erregerteil (6) zur Erzeugung eines im Wesentlichen konstanten Magnetflusses angeordnet sind, wobei zur Führung des von dem dritten Erregerteil (6) erzeugten Magnetflusses ein dritter (18) und ein vierter (19) magnetischer Kreis vorgesehen sind und das zweite Erregerteil (7) sowohl im zweiten (17) als auch im vierten magnetischen Kreis (19) angeordnet ist und der zweite (10) und der dritte Polschuh (11) ein flussführendes Element des dritten (18) magnetischen Kreises und der erste (9) und der dritte (11) Polschuh flussführende Elemente des vierten (19) magnetischen Kreises sind.

4. Elektromotorischer Stellantrieb mit einem beweglichen Teil (26) und einem feststehenden Teil (25), das wenigstens ein zur Erzeugung eines Magnetflusses vorgesehenes erstes Erregerteil (29) und wenigstens ein zur Erzeugung eines in der Amplitude veränderbaren Magnetflusses vorgesehenes zweites Erregerteil (32) aufweist, wobei zur Führung des vom ersten Erregerteil (29) erzeugten Magnetflusses wenigstens ein erster (40) und ein zweiter (41) magnetischer Kreis vorgesehen sind und der magnetische Widerstand des ersten (40) und des zweiten (41) magnetischen Kreises mittels der Position des beweglichen Teils (26) steuerbar ist und das zweite Erregerteil (32) in dem zweiten magnetischen Kreis (41) angeordnet ist, wobei das feststehende Teil (25) wenigstens einen ersten (33), einen zweiten (34) Polschuh aufweist, und das feststehende Teil (25) ein drittes Erregerteil (30) und einen dritten Polschuh (35) aufweist, wobei der erste (33) und der dritte (35) Polschuh flussführende Elemente des ersten magnetischen Kreises (40) und dass der zweite (34) und der dritte (35) Polschuh flussführende Elemente des zweiten magnetischen Kreises (41) sind, **dadurch gekennzeichnet, dass** das bewegliche Teil (26) als länglicher Kolben (26) ausgebildet ist, der entlang des ersten (33) und des zweiten Polschuhs (34) des feststehenden Teils (25) verschiebbar angeordnet ist.

5. Stellantrieb nach einem der Ansprüche 1 bis 4, **dadurch gekennzeichnet, dass** das erste (5; 29; 51) und/oder das dritte Erregerteil (6; 30; 52) ein Permanentmagnet (5, 6; 29, 30; 51, 52) ist.

6. Stellantrieb nach Anspruch 1, **dadurch gekennzeichnet, dass** der Luftspalt (8) zwischen dem beweglichen Teil (1; 26; 46) und dem ersten (9; 33) und dem zweiten Polschuh (10; 34) hinsichtlich eines geringen Reluktanzmomentes optimiert ist und dass der Luftspalt (8) zwischen dem feststehenden Teil (2; 25; 45) und dem dritten Polschuh (11; 35) hinsichtlich eines geringen Klebemomentes optimiert ist.

7. Stellantrieb nach Anspruch 5, **dadurch gekennzeichnet, dass** die Permanentmagnete (5, 6; 29, 30; 51, 52) als Ferritmagnete ausgeführt sind.

8. Türschliessmechanismus mit einem Stellantrieb nach Anspruch 4.

9. Verbrennungsmotor mit wenigstens einer Leitung, in der eine Drosselklappe zur Steuerung eines Gas- oder Flüssigkeitsstromes vorgesehen ist, **dadurch gekennzeichnet, dass** zur Verstellung der Drosselklappe ein Stellantrieb nach Anspruch 1 vorgesehen ist.

10. Kraftfahrzeug mit einem Stellantrieb nach Anspruch 1.

## Claims

1. An electromotive actuating device having a movable member (1) and a stationary member (2) comprising at least a first excitation part (5) adapted to generate a magnetic flux, and at least a second excitation part (7) adapted to generate a magnetic flux of variable amplitude, at least a first (16) and a second (17) magnetic circuit being provided for guiding the magnetic flux generated by the first excitation part (5), the reluctance of the first (16) and of the second (17) magnetic circuit being controllable by means of the position of the movable member (1), and the second excitation part (7) being included in the second magnetic circuit (17), the stationary member (2) comprising at least a first (9) and a second (10) pole shoe, and the stationary member (2) comprising a third excitation part (6) and a third pole shoe (11) arranged between the first (5) and the third excitation part (6), the first (9) and the third (11) pole shoe of the stationary member forming flux guiding elements of the first magnetic circuit (16), and the second (10) and the third (11) pole shoe forming flux guiding elements of the second magnetic circuit (17), **characterized in that** the movable member (1) is constructed as a rotor (1) inside the stationary member (2) constructed as a stator (2) and is separated from the stator (2) by an air gap (8).

2. An actuating device as claimed in Claim 1, **characterized in that** the actuating device takes the form of a rotary actuator and **in that** the circumferential angle of the third pole shoe (11) is smaller than the circumferential angle of the first (9) and the second (10) pole shoe.

3. An electromotive actuating device as claimed in Claim 1 or 2, **characterized in that** the first (5) and the third (6) excitation part are adapted to generate a substantially constant magnetic flux, a third (18) and a fourth (19) magnetic circuit having been provided for guiding the magnetic flux generated by the third excitation part (6), and the second excitation part (7) being included both in the second (17) and in the fourth (19) magnetic circuit, and the second (10) and the third (11) pole shoe forming a flux guiding element of the third magnetic circuit (18), and the first (9) and the third (11) pole shoe forming flux guiding elements of the fourth magnetic circuit (19).

4. An electromotive actuating device having a movable member (26) and a stationary member (25) comprising at least a first excitation part (29) adapted to generate a magnetic flux, and at least a second excitation part (32) adapted to generate a magnetic flux of variable amplitude, at least a first (40) and a second (41) magnetic circuit being provided for guiding the magnetic flux generated by the first excitation part (29), the reluctance of the first (40) and of the second (41) magnetic circuit being controllable by means of the position of the movable member (26), and the second excitation part (32) being included in the second magnetic circuit (41), the stationary member (25) comprising at least a first (33) and a second (34) pole shoe, and the stationary member (25) comprising a third excitation part (30) and a third pole shoe (35), the first (33) and the third (35) pole shoe forming flux guiding elements of the first magnetic circuit (40), and the second (34) and the third (35) pole shoe forming flux guiding elements of the second magnetic circuit (41), **characterized in that** the movable member (26) is constructed as an elongate plunger (26) which is arranged so as to be movable along the first (33) and the second (34) pole shoe of the stationary member (25).

5. An actuating device as claimed in any one of Claims 1 to 4, **characterized in that** the first (5; 29; 51) and/or third (6; 30; 52) excitation part is a permanent magnet (5, 6; 29, 30; 51, 52).

6. An actuating device as claimed in Claim 1, **characterized in that** the air gap (8) between the movable member (1; 26; 46) and the first (9; 33) and the second (10; 34) pole shoe has been optimized for a minimal reluctance torque, and **in that** the air gap (8) between the stationary member (2; 25; 45) and the third pole shoe (11; 35) has been optimized for a minimal detent torque.

7. An actuating device as claimed in Claim 5, **characterized in that** the permanent magnets (5, 6; 29, 30; 51, 52) take the form of ferrite magnets.

8. A door locking mechanism including an actuating device as claimed in Claim 4.

9. A combustion engine having at least one conduit which includes a throttle valve for controlling a gas or fluid flow, **characterized in that** for actuating the throttle valve there has been provided an actuating device as claimed in Claim 1.

10. A motor vehicle including an actuating device as claimed in Claim 1.

## Revendications

1. Mécanisme de réglage à moteur électrique avec une partie mobile (1) et une partie fixe (2) qui présente au moins une première pièce excitatrice (5) pour la production d'un flux magnétique et au moins une deuxième pièce excitatrice (7) prévue pour la production d'un flux magnétique variable en amplitude, au moins des premier (16) et deuxième (17) circuits magnétiques étant prévus pour le guidage du flux magnétique produit par la première pièce excitatrice (5), la résistance magnétique des premier (16) et deuxième (17) circuits magnétiques pouvant être commandée à l'aide de la position de la partie (1) mobile et la deuxième pièce excitatrice (7) étant disposée dans le deuxième circuit magnétique (17), auquel cas la partie fixe (2) présente au moins une première (9) et une deuxième (10) pièces polaires et le stator (2) comprend une troisième pièce excitatrice (6) et une pièce polaire (11) disposée entre les première (5) et troisième (6) parties excitatrices, les première (9) et troisième (11) pièces polaires du stator étant les éléments conducteurs de flux du premier circuit magnétique (16) et les deuxième (10) et troisième (11) pièces polaires sont les éléments conducteurs de flux du deuxième circuit magnétique (17), **caractérisé en ce que** la partie mobile (1) est conçue comme un rotor (1) à l'intérieur de la partie fixe (2) conçue comme un stator (2) et est séparée du stator (2) par un entrefer (8).

2. Mécanisme de réglage selon la revendication 1, **caractérisé en ce que** le mécanisme de réglage est exécuté comme un actionneur rotatif et que l'angle circonférentiel de la troisième pièce polaire (11) est inférieur à l'angle circonférentiel des première (9) et deuxième (10) pièces polaires.

3. Mécanisme de réglage à moteur électrique selon l'une des revendications 1 ou 2, **caractérisé en ce que** les première (5) et troisième (6) pièces excitatrices sont disposées pour la production d'un flux magnétique essentiellement constant, des troisième (18) et quatrième (19) circuits magnétiques étant prévus pour le guidage du flux magnétique produit par la troisième pièce excitatrice (6) et la deuxième pièce excitatrice (7) est disposée à la fois dans les deuxième (17) et quatrième (19) circuits magnétiques et les deuxième (10) et troisième (11) pièces polaires sont un élément conducteur de flux du troisième (18) circuit magnétique et les première (9) et troisième (11) pièces polaires les éléments conducteurs de flux du quatrième (19) circuit magnétique.

4. Mécanisme de réglage à moteur électrique avec une partie mobile (26) et une partie fixe (25) qui présente au moins une première pièce excitatrice (29) pour la production d'un flux magnétique et au moins une deuxième pièce excitatrice (32) prévue pour la production d'un flux magnétique variable en amplitude, au moins des premier (40) et deuxième (41) circuits magnétiques étant prévus pour le guidage du flux magnétique produit par la première pièce excitatrice (29), la résistance magnétique des premier (40) et deuxième (41) circuits magnétiques pouvant être commandée à l'aide de la position de la partie (26) mobile et la deuxième pièce excitatrice (32) étant disposée dans le deuxième circuit magnétique (41), auquel cas la partie fixe (25) présente au moins une première (33) et une deuxième (34) pièces polaires et la partie fixe (25) comprend une troisième pièce excitatrice (30) et une troisième pièce polaire (35), les première (33) et troisième (35) pièces polaires étant les éléments conducteurs de flux du premier circuit magnétique (40) et les deuxième (34) et troisième (35) pièces polaires sont les éléments conducteurs de flux du deuxième circuit magnétique (41), **caractérisé en ce que** la partie mobile (26) est conçue comme un piston (26) longitudinal qui est disposée à coulissement le long des première (33) et deuxième (34) pièces polaires de la partie fixe (25).

5. Mécanisme de réglage selon l'une des revendications 1 à 4, **caractérisé en ce que** les première (5; 29; 51) et/ou troisième pièces excitatrices (6; 30; 52) est un aimant permanent (5, 6; 29, 30; 51, 52).

6. Mécanisme de réglage selon la revendication 1, **caractérisé en ce que** l'entrefer (8) est disposé entre la partie mobile (1; 26; 46) et les première (9; 33) et deuxième pièces polaires (10; 34) sont optimisées sur le plan d'un couple de réluctance minime et que l'entrefer (8) entre la partie fixe (2; 25; 45) et la troisième pièce polaire (11; 35) est optimisé sur le plan d'un faible couple d'adhérence.

7. Mécanisme de réglage selon la revendication 5, **caractérisé en ce que** les aimants permanents (5, 6; 29, 30; 51, 52) sont exécutés comme des aimants de ferrite.

8. Mécanisme de fermeture de porte avec un mécanisme de réglage selon la revendication 4.

9. Moteur à combustion avec au moins une conduite dans laquelle est prévu un étrangleur pour la commande d'un flux de gaz ou de liquide, **caractérisé en ce qu'**un mécanisme de réglage selon la revendication 1 est prévue pour le réglage de l'étrangleur.

10. Véhicule automobile avec un mécanisme de réglage selon la revendication 1.
